# EUROPÄISCHE PATENTSCHRIFT

(11) **EP 1 210 483 B1**
(45) Veröffentlichungstag und Bekanntmachung des Hinweises auf die Patenterteilung: **02.04.2008**
(21) Anmeldenummer: 00972565.6
(22) Anmeldetag: 25.08.2000
(51) Int. Cl.: E03F 7/10, E02B 3/02, E02F 3/92, A01K 63/04

(54) **SCHLAMMSAUGER**
MUD SUCTION UNIT
SUCEUR DE VASE

(30) Priorität: 03.09.1999 DE 19942187
(43) Veröffentlichungstag der Anmeldung: 05.06.2002
(73) Patentinhaber: Oase GmbH, 48477 Hörstel (DE)
(72) Erfinder: HOFFMEIER, Dieter, 49479 Ibbenbüren (DE)
(74) Vertreter: Kayser, Christoph
(86) Internationale Anmeldenummer: PCT/DE2000/002921
(87) Internationale Veröffentlichungsnummer: WO 2001/017916

(56) Entgegenhaltungen:
- GB-A- 2 254 890
- US-A- 3 549 015
- US-A- 3 706 319
- US-A- 3 971 400
- US-A- 5 263 225
- US-A- 5 618 410

## Beschreibung

Die vorliegende Erfindung betrifft ein Verfahren zum Betrieb eines Schlammsaugers gemäß Oberbegriff von Anspruch 1.

Aus der US-A-5,618,410 ist ein Verfahren zum Betrieb eines Schlammsaugers bekannt. Der Motor des Schlammsaugers ist, bei Erreichen einer Füllstandsgrenze eines schlammhaltigen Fluids in einem Aufnahmebehätter durch Abschalten der Stromversorgung der Vorrichtung ausschaltbar.

Aus US-A-5,263,225 ist ein Schlammsauger mit Unterdruckventil bekannt, das sich bei eingeschaltetem Motor öffnet, wenn der Schlammsaugvorgang unterbrochen wird.

Aus der US-A-3,706,319 ist ein Schlammsauger mit einem Saugelement, einem damit verbundenen Aufnahmebehälter und einem Motor zur Erzeugung einer Saugströmung bekannt, wobei der Schlammsauger zusätzlich ein Ablaufelement aufweist, das an den Aufnahmebehälter angeschlossen ist. Der Motor wird bei Erreichen der Füllstandsgrenze ausgeschaltet.

Die Schlammsauger des vorgenannten Standes der Technik haben den Nachteil, dass sie entweder nur automatisch (US-A-5,263,225; US-A-5,618,410) oder nur manuell (US-A-3,706,319) zur Öffnung eines Unterdruckventils gebracht werden können.

Die völlig automatische Leerung hat den Nachteil, dass bei bestimmten schlammhaltigen Fluiden eine Kontrollmöglichkeit der ordnungsgemäßen Entleerung unmöglich wird, da der Saugvorgang nicht unterbrochen wird. Die manuelle Auslösung der Öffnung eines Unterdruckventils kann in bestimmten Fällen lästig sein, wenn eine komfortablere automatische Auslösung erwünscht ist.

Mit den Schlammsaugem des Standes der Technik ist eine Kombination einer automatischen und manuellen Auslösung der Öffnung eines Unterdruckventils nicht möglich.

Die Aufgabe der vorliegenden Erfindung ist daher, ein Verfahren zu schaffen, mit dem ein Schlammabsaugvorgang mit erheblich weniger zeitraubenden Unterbrechungen durchgeführt werden kann.

Die Aufgabe wird erfindungsgemäß durch die Merkmale des Anspruchs 1 gelöst.

Das erfindungsgemäße Verfahren hat den Vorteil, dass kontinuierlich durchgearbeitet werden kann, ohne das Gerät schwer handhaben zu müssen. Ferner kann das Gerät in einfacher Weise auch als herkömmlicher Nasssauger umgerüstet werden.

Eine Ausführungsform der vorliegenden Erfindung wird im folgenden anhand der Zeichnungen näher beschrieben. Es zeigen:

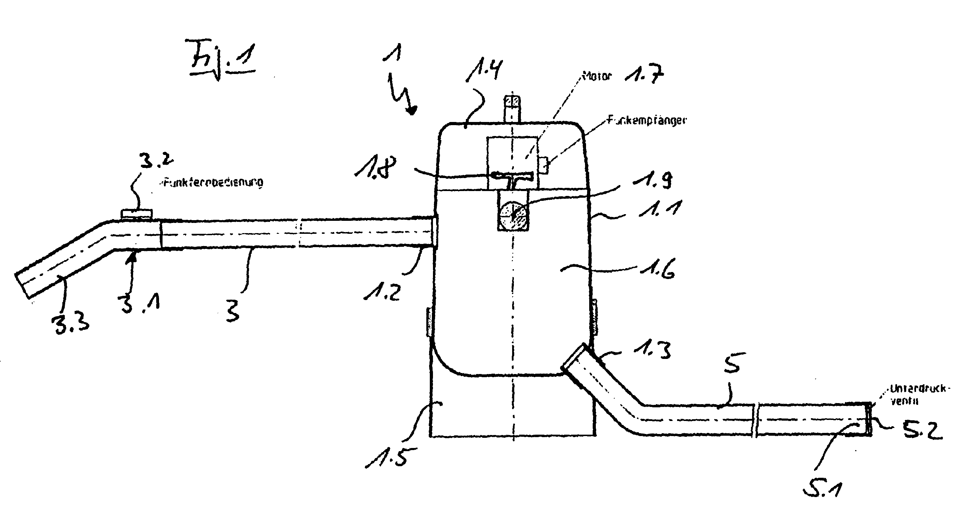

- Fig. 1: eine schematische Ansicht eines Schlammsaugers zur Verwendung bei dem erfindungsgemässen Verfahren;
- Fig. 2a, b, c: eine schematische Ansicht einer Saugdüse zur Verwendung bei dem erfindungsgemässen Verfahren von oben (Fig. 2a), von oben ohne Deckel (Fig. 2b) und von unten (Fig. 2c).

Der Schlammsauger 1 umfasst ein Gehäuse 1.1, an welchem ein Anschluss 1.2 für ein Saugelement 3 und ein Anschluss 1.3 für ein Abflusselement 5 ausgebildet ist. Das Gehäuse 1.1 ist zudem in seinem bodenfemen, oberen Bereich als ein Deckel 1.4 ausgebildet, der an dem unteren Gehäuse 1.1 lösbar befestigt ist. Bodenseitig ist das Gehäuse 1.1 mit einem Fußelement 1.5 versehen. Das Innere des Gehäuses 1.1 ist in seinem mittleren Bereich als Aufnahmebehälter 1.6 für Schlamm und Wasser oder Materialien ähnlicher Konsistenz ausgebildet. Der Anschluss 1.2 befindet sich im oberen Teil des Aufnahmebehälters 1.6 und der Anschluss 1.3 befindet sich im unteren Teil des Aufnahmebehälters 1.6, vorzugsweise dem Anschluss 1.2 diametral gegenüberliegend.

Oberhalb des Aufnahmebehälters 1.6, also oberhalb des Bereichs in dem Gehäuse 1.1, der mit Schlamm und Wasser gefüllt werden kann, ist ein Motor 1.7, vorzugsweise ein Elektromotor, angeordnet, der eine allgemein bekannte Saugeinrichtung 1.8, wie z.B. ein luftziehendes Flügelelement, antreibt. Während des Antriebs wird Luft aus dem Aufnahmebehälter 1.6 angesaugt und über Öffnungen im oberen Gehäusebereich nach außen abgegeben. Dadurch entsteht im Saugelement 3 ein Unterdruck.

Der Motor 1.7 ist mit einem Kugelventil 1.9 verbunden. Das Kugelventil 1.9 befindet sich in der Nähe der vorgesehenen Füllstandsgrenze des Aufnahmebehälters 1.6. Bei zunehmender Füllung des Aufnahmebehälters 1.6 und Erreichen der Füllstandsgrenze wird das Kugelventil in eine Verschlussstellung gebracht, die bewirkt, dass der Motor 1.7 hörbar schneller läuft.

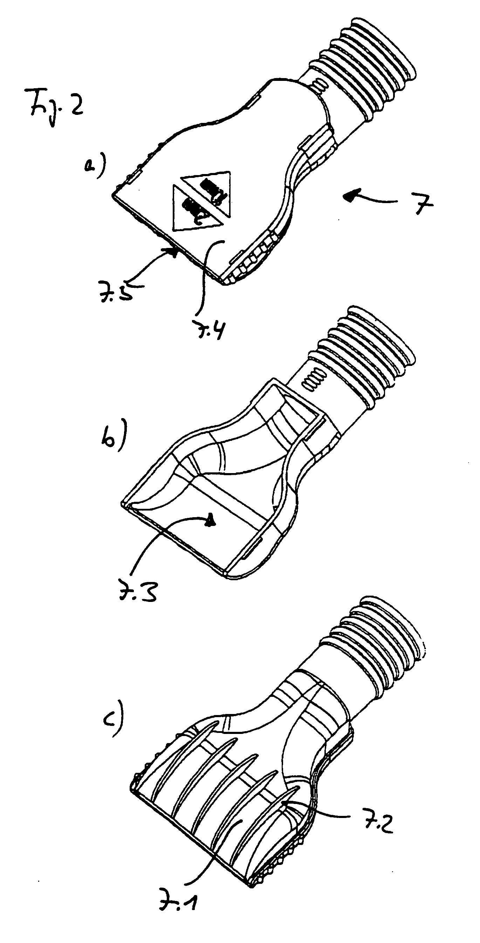

Das Saugelement 3 ist an dem Anschluss 1.2 in allgemein bekannter Weise lösbar befestigt und umfasst in einem Greifbereich 3.1 eine Funkfembedienung 3.2. Ferner ist am freien Ende des Saugelements 3 ein Saugrüssel 3.3 ausgebildet, auf den eine Saugdüse 7 (Fig. 2a, b, c) aufsetzbar ist. Das Saugelement 3 kann ein Schlauch oder Rohr sein.

Das Ablaufelement 5 ist an dem Anschluss 1.3 in allgemein bekannter Weise lösbar befestigt und umfasst an seinem freien Ende 5.1 ein Unterdruckventil 5.2. Das Ablaufelement 5 ist ebenfalls ein Schlauch oder Rohr.

Die Funktionsweise ist nun wie folgt:

Das Saugelement 3 hängt mit dem Saugrüssel 3.3 und wahlweise mit der Saugdüse 7 im Wasser in Teichbodennähe. Durch Einschaltung des Motors 1.7 über die Fernbedienung 3.2 beginnt ein Saugvorgang. Über den Saugrüssel 3.3 wird Schlamm vom Teichboden durch das Saugelement 3 in den Aufnahmebehälter 1.6 gesaugt. Der Aufnahmebehälter 1.6 und das Ablaufelement 5 bis zum Unterdruckventil 5.2 füllen sich langsam mit Schlamm. Das Unterdruckventil 5.2 ist wegen des herrschenden Unterdruckes geschlossen. Bei Erreichen der Füllstandsgrenze im Aufnahmebehälter 1.6 schließt das Kugelventil 1.9, wodurch der Motor 1.7 hörbar schneller läuft. Dies ist für den Benutzer das Zeichen, den Motor 1.7 über die Fembedienung 3.2 auszuschalten. Dabei kann der Saugrüssel 3.3 unverändert im Wasser hängen bleiben. Durch das Ausschalten des Motors 1.7 entfällt der Unterdruck im Aufnahmebehälter 1.6, so dass das Unterdruckventil 5.2 aufgrund des nun durch den Schlamm erzeugten Innendrucks öffnet und der Schlamm über das Ablaufelement 5 ausläuft, bis der Aufnahmebehälter 1.6 wieder leer ist. Dann kann über die Fembedienung 3.2 der Motor 1.7 wieder eingeschaltet werden, so dass sich der Vorgang wiederholt.

In weiteren Ausführungsformen wäre denkbar, den Einschalt mechanismus weiter zu automatisieren. Über Sensoren könnte der Motor 1.7 bei Erreichen eines minimalen Füllstandes automatisch wieder eingeschaltet werden, solange bis der Benutzer von außerhalb einen Hauptschalter zum Ausschalten betätigt.

Neben der Fembedienung 3.2 kann auch eine Schalteinrichtung direkt am Schlammsauger 1 vorgesehen sein.

Die Saugleistung wird optimiert, wenn auf dem Saugrüssel 3.3 mit vorbestimmten Querschnitt die Saugdüse 7 aufgesetzt ist. Die Verbindung erfolgt über bekannte Steck- und Dreh-Stecksysteme. Die Saugdüse 7 ist mit einem klauenartigen Unterteil 7.1 (Fig. 2c) ausgebildet, die eine Mehrzahl von Stegen 7.2 aufweist, die in Saugrichtung angeordnet sind. Diese Stege 7.2 bewirken eine Lockerung des Schlammes, so dass Schwebstoffe nach oben aufgewirbelt werden und gröbere Bestandteile wie Kies und Sand am Teichboden verbleiben.

Das klauenartige Unterteil 7.1 umschließt an drei Seiten einen Düsenhohlraum 7.3 (Fig. 2b). Der zur Oberseite der Saugdüse 7 offene Düsenhohlraum 7.3 ist durch einen Deckel 7.4 verschlossen (Fig. 2a). Der Deckel 7.4 ist an dem Unterteil 7.1 in Saugrichtung verschiebbar festgelegt. Zwischen dem Unterteil 7.1 und dem Deckel 7.4 ist endseitig ein Saugschlitz 7.5 ausgebildet, dessen Öffnungsweite durch Verschiebung des Deckels 7.4 an dem Unterteil 7.1 eingestellt werden kann. So kann verhindert werden, dass kleine Fische und sonstige Kleintiere in die Saugdüse gelangen.

In Hartschalenbecken kann die Saugdüse 7 auch um 180° gedreht zum Einsatz kommen. Dann kann die glatte Oberseite des Deckels 7.4 unmittelbar über den Beckenboden bewegt werden.

## Patentansprüche

1. Verfahren zum Betrieb eines Schlammsaugers mit einem Aufnahmebehälter (1.6) an dem ein Saugelement (3) zum Ansaugen eines schlammhaltigen Fluids und ein Ablaufelement (5) zum Ablaufen des angesaugten schlaminhaltigen Fluids angeschlossen sind, und mit einem Motor (1.7) zur Erzeugung einer Saugströmung, wobei der Motor (1.7) bei Erreichen einer Füllstandsgrenze des schlammhaltigen Fluids ausschaltbar ist, wobei das Ablaufelement (5) ein Unterdruckventil (5.2) umfasst, das während eines Saugvorganges aufgrund des im Aufnahmebehälter (1.6) vorhandenen Unterdrucks geschlossen ist und bei Ausschaltung des Motors (1.7) aufgrund des im Aufnahmebehälter (1.6) vorhandenen Innendrucks geöffnet ist,
**dadurch gekennzeichnet,**
**dass** der Motor (1.7) mit einem Kugelventil (1.9) verbunden wird, das im Bereich einer Füllstandsgrenze im Aufnahmebehälter (1.6) angeordnet ist und bei Erreichen der Füllstandsgrenze schließt, und dass ein schnelleres Laufen des Motors (1.7) beim Schließen des Kugelventils (1.9) hörbar wird und für den Benutzer das Zeichen ist, den Motor (1.7) auszuschalten.

2. Verfahren nach Anspruch 1,
**dadurch gekennzeichnet,**
**dass** der Aufnahmebehälter (1.6) einen ersten Anschluss (1.2) für das Saugelement (3) in einem deckelseitigen, oberen Teil des Aufnahmebehälters (1.6) aufweist und einen zweiten Anschluss (1.3) für das Ablaufelement (5) in einem bodenseitigen, unten Teil des Aufnahmebehälter (1.6) aufweist.

3. Verfahren nach Anspruch 2,
**dadurch gekennzeichnet,**
**dass** der zweite Anschluss (1.3) dem ersten Anschluss (1.2) diametral gegenüber angeordnet wird.

4. Verfahren nach einem der vorstehenden Ansprüche,
**dadurch gekennzeichnet,**
**dass** das Saugelement (3) einen Greifbereich (3.1) aufweist, an dem eine Funkfernbedienung (3.2) zur Ein/Aus-Schaltung des Motors (1.7) angeordnet wird.

5. Verfahren nach einem der vorstehenden Ansprüche,
**dadurch gekennzeichnet,**
**dass** an einem freien Ende des Saugelements (3) ein Saugrüssel (3.3) ausgebildet ist, auf den eine Saugdüse (7) aufgesetzt wird, wobei die Saugdüse (7) mit einem klauenartigen Unterteil (7.1) ausgebildet ist, das eine Mehrzahl von Stegen (7.2) aufweist.

6. Verfahren nach Anspruch 5,
**dadurch gekennzeichnet,**
**dass** die Saugdüse (7) einen Saugschlitz (7.5) aufweist, dessen Öffnungsweite verstellt wird.

## Claims

1. A method for operating a sludge extractor comprising a receiving container (1.6) to which are connected a suction element (3) for extracting a sludge-containing fluid and a drain element (5) for draining the extracted sludge-containing fluid and comprising a motor (1.7) for producing a suction flow, wherein the motor (1.7) can be switched off when a filling limit of the sludge-containing fluid is reached, wherein the drain element (5) comprises a suction relief valve (5.2) which is closed during the extraction process due to the negative pressure present in the receiving container (1.6), and which is opened when the motor (1.7) is switched off due to the internal pressure present in the receiving container (1.6),
**characterised in**
**that** the motor (1.7) is connected to a ball valve (1.9) that is located in the area of a filling limit in the receiving container (1.6) and closes when the filling limit is reached and that faster running of the motor (1.7) when the ball valve (1.9) is closed is audible and is a sign to the user that the motor (1.7) should be switched off.

2. The method according to claim 1,
**characterised in**
**that** the receiving container (1.6) has a first connection (1.2) for the suction element (3) in a cover-side upper part of the receiving container (1.6) and a second connection (1.3) for the drain element (5) in a bottom-side lower part of the receiving container (1.6).

3. The method according to claim 2,
**characterised in**
**that** the second connection (1.3) is located diametrically opposite to the first connection (1.2).

4. The method according to any one of the preceding claims,
**characterised in**
**that** the suction element (3) has a gripping region (3.1) on which a radio remote control (3.2) for switching on/off the motor (1.7) is located.

5. The method according to any one of the preceding claims,
**characterised in**
**that** a vapour recovery boot (3.3) is formed at the free end of the suction element (3) and a suction nozzle (7) is positioned thereon, wherein the suction nozzle (7) is formed with a claw-like lower part (7.1) which has a a plurality of webs (7.2).

6. The method according to claim 5,
**characterised in**
**that** the suction nozzle (7) has a suction slit (7.5) whose aperture width is adjusted.

## Revendications

1. Procédé d'utilisation d'un aspirateur de boue comportant un récipient récepteur (1.6), auquel sont raccordés un élément d'aspiration (3) pour aspirer un fluide contenant de la boue et un élément d'évacuation (5) pour évacuer le fluide contenant de la boue aspiré, et un moteur (1.7) pour générer un flux d'aspiration, le moteur (1.7) pouvant être désactivé en cas d'atteinte d'une limite de niveau de remplissage de fluide contenant de la boue, l'élément d'évacuation (5) comportant une valve de dépression (5.2) qui, pendant une opération d'aspiration, est fermée en raison de la dépression régnant dans le récipient récepteur (1.6) et, en cas de désactivation du moteur (1.7), est ouverte en raison de la pression interne régnant dans le récipient récepteur (1.6),
**caractérisé en ce que**
le moteur (1.7) est relié à un clapet à bille (1.9) qui est disposé au niveau d'une limite de niveau de remplissage du récipient récepteur (1.6) et se ferme en cas d'atteinte de la limite de niveau de remplissage, et qu'une marche plus rapide du moteur (1.7) à la fermeture du clapet à bille (1.9) devient audible et est pour l'utilisateur le signe indiquant qu'il faut désactiver le moteur (1.7).

2. Procédé selon la revendication 1,
**caractérisé en ce que**
le récipient récepteur (1.6) comporte un premier raccordement (1.2) pour l'élément d'aspiration (3) dans une partie supérieure située au niveau du couvercle du récipient récepteur (1.6) et un deuxième raccordement (1.3) pour l'élément d'évacuation (5) dans une partie inférieure située au niveau du fond du récipient récepteur (1.6).

3. Procédé selon la revendication 2,
**caractérisé en ce que**
le deuxième raccordement (1.3) est disposé diamétralement à l'opposé du premier raccordement (1.2).

4. Procédé selon une des revendications précédentes,
**caractérisé en ce que**
l'élément d'aspiration (3) comporte une zone de préhension (3.1) sur laquelle est disposée une télécommande (3.2) pour activer/désactiver le moteur (1.7).

5. Procédé selon une des revendications précédentes,
**caractérisé en ce que**,
à une extrémité libre de l'élément d'aspiration (3) est réalisée une trompe d'aspiration (3.3) sur laquelle est posée une buse d'aspiration (7), la buse d'aspiration (7) étant réalisée avec une clavette inférieure en forme de griffe (7.1) présentant une pluralité de traverses (7.2).

6. Procédé selon la revendication 5,
**caractérisé en ce que**
la buse d'aspiration (7) présente une fente d'aspiration (7.5) dont la largeur d'ouverture se règle.
